(19) Europäisches Patentamt
European Patent Office
Office européen des brevets

(11) EP 3 255 065 B1

(12) **EUROPEAN PATENT SPECIFICATION**

(45) Date of publication and mention of the grant of the patent:
**26.12.2018 Bulletin 2018/52**

(21) Application number: **16746427.0**

(22) Date of filing: **21.01.2016**

(51) Int Cl.:
***C08C 19/00*** *(2006.01)* ***C08L 15/00*** *(2006.01)*
***C08L 7/00*** *(2006.01)* ***C08L 9/00*** *(2006.01)*
***C08L 51/04*** *(2006.01)* ***C08C 19/22*** *(2006.01)*

(86) International application number:
**PCT/JP2016/051740**

(87) International publication number:
**WO 2016/125596 (11.08.2016 Gazette 2016/32)**

(54) **MODIFIED CONJUGATED DIENE-BASED POLYMER AND RUBBER COMPOSITION CONTAINING SAME**

MODIFIZIERTES KONJUGIERTES POLYMER AUF DIENBASIS UND KAUTSCHUKZUSAMMENSETZUNG DAMIT

POLYMÈRE À BASE DE DIÈNE CONJUGUÉ MODIFIÉ ET COMPOSITION DE CAOUTCHOUC LE CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2015 JP 2015022612**

(43) Date of publication of application:
**13.12.2017 Bulletin 2017/50**

(73) Proprietor: **Bridgestone Corporation**
**Tokyo 104-8340 (JP)**

(72) Inventor: **URATA, Tomohiro**
**Tokyo 104-8340 (JP)**

(74) Representative: **Oxley, Robin John George**
**Marks & Clerk LLP**
**90 Long Acre**
**London WC2E 9RA (GB)**

(56) References cited:
**GB-A- 743 587**
**GB-A- 1 271 830**
**JP-A- S 638 403**
**JP-A- S5 154 520**
**JP-A- S5 545 761**
**JP-A- 2004 359 716**
**US-A- 3 444 134**
**US-A- 3 582 514**
**US-A- 4 499 243**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 255 065 B1

Printed by Jouve, 75001 PARIS (FR)

## Description

### Technical Field

The present invention relates to a modified conjugated diene polymer which can improve the low-heat-generation property and abrasion resistance, and a rubber composition containing the same.

### Background Art

In recent years, from the viewpoint of conserving energy, tires having a small rolling resistance are demanded. For this reason, as a rubber composition used in a tire tread and the like, a rubber composition having a low tanδ and excellent low-heat-generation property is demanded. Further, the rubber composition for use in a tread is required to have excellent abrasion resistance as well as excellent low-heat-generation property. For meeting such demands, in order to improve the low-heat-generation property and abrasion resistance of the rubber composition, various attempts are made to improve the affinity of a filler, such as carbon black or silica, with a rubber component in the rubber composition.

For example, PTL 1 has proposed a modified natural rubber which is obtained by adding a polar group-containing compound to at least one natural rubber raw material selected from the group consisting of natural rubber, a natural rubber latex coagulation product, and a natural rubber cup lump, and applying a mechanical shear force to the resultant mixture to cause graft polymerization or addition.

PTL 2 discloses a modified natural rubber latex which is obtained by adding a polar group-containing mercapto compound to a natural rubber latex so that the polar group-containing mercapto compound is added to natural rubber molecules in the natural rubber latex.

Further, PTLs 3 to 6 have proposed a modified natural rubber which is obtained by graft-polymerizing various polar group-containing monomers on a natural rubber latex.

Reference is also made to US 4499243 A, which discloses a method of treating diene rubber with amino- and hydroxyl aryl compounds and GB 743587 A, which discloses resinous nitrile reaction products. In addition, US 3582514 A and GB 1271830 A, disclose compositions of phenol formaldehyde resins and phenol polymers of isoprene and US 3444134 A, discloses phenolated polymers of isoprene.

However, for obtaining a rubber component which has a further improved affinity with a reinforcing filler formed from carbon black and/or silica so as to enable the rubber composition to be further improved in low-heat-generation property and abrasion resistance, the modified conjugated diene polymer is needed to be further improved.

### Citation List

### Patent Literature

PTL 1: JP-A 2006-152171
PTL 2: JP-A 2006-152045
PTL 3: JP-A 2004-359716
PTL 4: JP-A 2004-359717
PTL 5: JP-A 2004-359713
PTL 6: JP-A 2004-359714

### Summary of Invention

### Technical Problem

In this situation, an object of the present invention is to provide a modified conjugated diene polymer which can further improve a rubber composition in the low-heat-generation property and abrasion resistance, and a rubber composition using the same.

### Solution to Problem

The present inventor made attempts to modify a conjugated diene polymer with various compounds in order to achieve the above object, and has found that the object of the present invention can be achieved by modifying a conjugated diene polymer with a specific compound, and the present invention has been completed.

Specifically, the present invention is directed to a modified conjugated diene polymer in which a phenoxy group of a polar group-containing phenoxy compound is bonded to at least one selected from the group consisting of the end, main chain, and side chain of a conjugated diene polymer, wherein the modified conjugated diene polymer has both an amino group and a carboxyl group as the polar group and, wherein the conjugated diene polymer is natural rubber.

Advantageous Effects of Invention

In the present invention, there can be provided a modified conjugated diene polymer which can further improve a rubber composition in the low-heat-generation property and abrasion resistance, and a rubber composition using the same.

Description of Embodiments

[Modified conjugated diene polymer]

The present invention provides a modified conjugated diene polymer in which a phenoxy group of a polar group-containing phenoxy compound is bonded to at least one selected from the group consisting of the end, main chain, and side chain of a conjugated diene polymer.

The conjugated diene polymer used in the modified conjugated diene polymer of the present invention means a polymer which does not contain a non-conjugated olefin as a monomer unit component (a part of a copolymer). Styrene is not included in the non-conjugated olefin.

With respect to the conjugated diene polymer, natural rubber is used.

[Polar group-containing phenoxy compound]

The polar group-containing phenoxy compound in the present invention is preferably a polar group-containing phenolic compound represented by the following general formula (I).

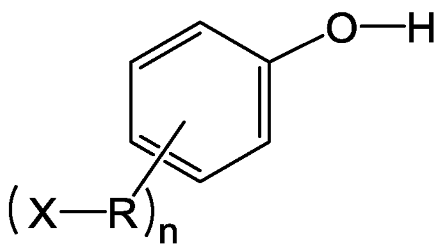

··· (I)

In the general formula (I), R is a single bond or a hydrocarbon group having 1 to 10 carbon atoms, and X is a polar group. n is 1 to 5. When a plurality of -R-X are present, they may be the same or different. Further, a plurality of X's may be bonded to a single R, and, in this case, X's may be the same or different.

In the present invention, the wording "R is a single bond" means that X adjacent to R in the general formula (I) is bonded directly to an aromatic ring through a single bond.

It is preferred that the polar group of the polar group-containing phenoxy compound in the present invention is at least one selected from the group consisting of an amino group, an imino group, a nitrile group, an ammonium group, an imide group, an amide group, a hydrazo group, an azo group, a diazo group, a sulfide group, a disulfide group, a sulfonyl group, a sulfinyl group, a thiocarbonyl group, a hydroxyl group, a carboxyl group, a carbonyl group, an epoxy group, an oxycarbonyl group, a nitrogen-containing heterocyclic group, an oxygen-containing heterocyclic group, a tin-containing group, and an alkoxysilyl group. Of these, the polar group is especially preferably at least one selected from an amino group and a carboxyl group. In this case, at least one selected from an amino group and a carboxyl group may be directly bonded to an aromatic ring, or at least one selected from an amino group and a carboxyl group may be bonded to a hydrocarbon group directly bonded to an aromatic ring. Alternatively, at least one selected from an amino group and a carboxyl group may be directly bonded to an aromatic ring, and another one may be bonded to a hydrocarbon group directly bonded to the aromatic ring. At least one selected from an amino group and a carboxyl group may be present in at least one selected from the group consisting of a peptide-derived monovalent group and a protein-derived monovalent group.

The modified conjugated diene polymer of the present invention has both an amino group and a carboxyl group as the polar group.

The polar group-containing phenoxy compound in the present invention is preferably at least one polar group-containing (thio)phenolic compound selected from the group consisting of tyrosine, amidol, 4-aminophenol, 4-(aminomethyl)phenol, 4-hydroxybenzoic acid, 4-hydroxybenzyl alcohol, 4-triethoxysilylphenol, 4-[(2-triethoxysilyl)ethyl]phenol, and 4-[(2-triethoxysilyl)ethylthio]phenol, and at least one selected from the group consisting of a peptide having tyrosine and a protein having tyrosine. Of these, the polar group-containing phenoxy compound is further preferably at least one selected from the group consisting of tyrosine, a peptide having tyrosine, and a protein having tyrosine.

The modified conjugated diene polymer of the present invention is preferably formed in a way such that the phenoxy group of the polar group-containing phenoxy compound produces phenoxy radials due to a phenol oxidase, such as laccase, and the resultant radials are added to at least one site of the conjugated diene polymer selected from the end of the conjugated diene polymer, a double bond of the main chain, a double bond of the side chain, the α-position of a double bond of the main chain, and the α-position of a double bond of the side chain to form a modified conjugated diene polymer.

As a phenol oxidase, laccase is preferred. Laccase is an oxidase having the ability to oxidize a phenol.

As examples of a reaction in which the conjugated diene polymer is reacted with the polar group-containing phenoxy compound to form the modified conjugated diene polymer of the present invention, the reaction formula (II) and reaction formula (III) are shown below. The reaction formula (II) shows a case in which a reaction occurs at the main chain of the conjugated diene polymer. The modified conjugated diene polymer (II-a) shows a case in which the polar group-containing phenoxy compound has been added to a double bond of the main chain of the conjugated diene polymer, and the modified conjugated diene polymer (II-b) shows a case in which the polar group-containing phenoxy compound has been added to the α-position of a double bond of the main chain of the conjugated diene polymer.

The reaction formula (III) shows a case in which a reaction occurs at the side chain or the α-position of a double bond of the side chain of the conjugated diene polymer. The modified conjugated diene polymers (III-a) and (III-b) show a case in which the polar group-containing phenoxy compound has been added to a double bond of the side chain of the conjugated diene polymer, and the modified conjugated diene polymer (111-c) shows a case in which the polar group-containing phenoxy compound has been added to the α-position of a double bond of the side chain of the conjugated diene polymer.

The reaction for forming the modified conjugated diene polymer of the present invention is not limited to the reaction formula (II) and reaction formula (III).

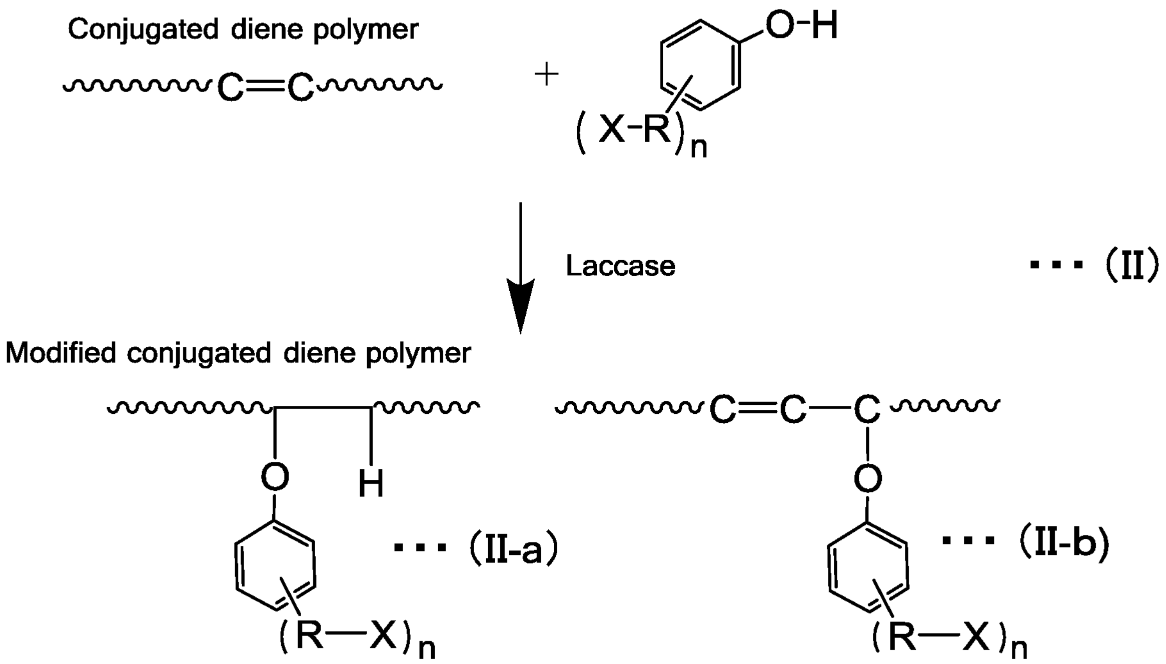

··· (II)
··· (II-a)
··· (II-b)

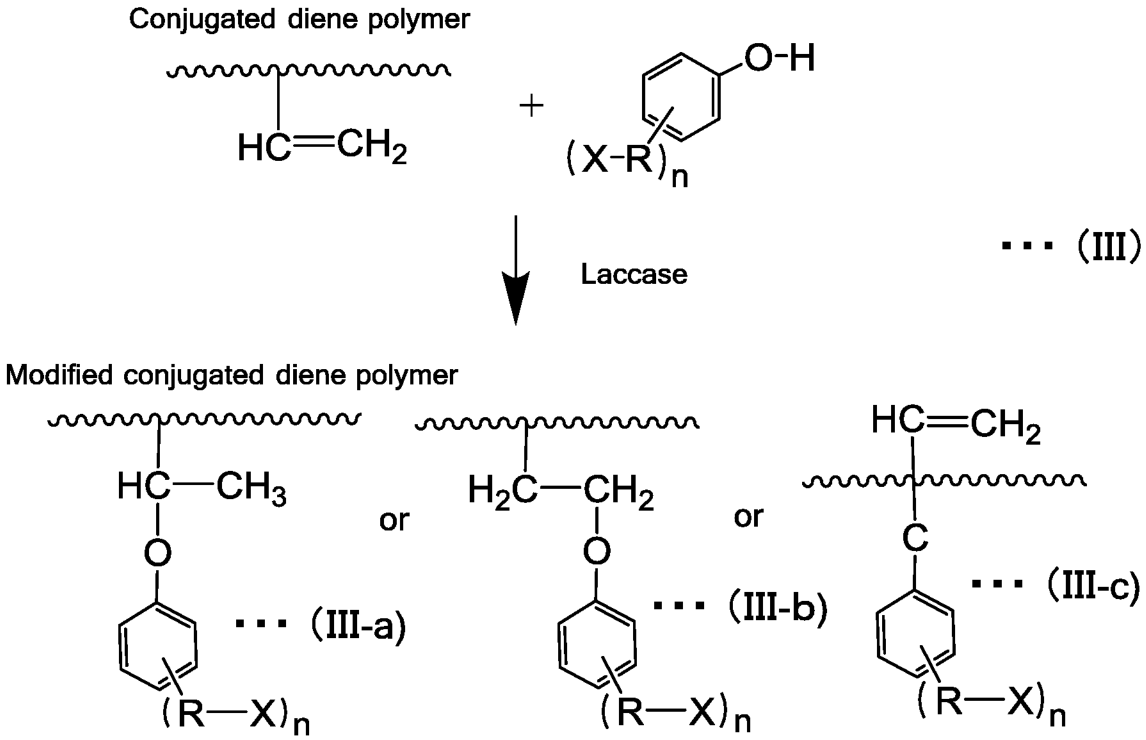


··· (III)

or

or

··· (III-a)

··· (III-b)

··· (III-c)

In the present invention, the modification degree (millimole) means an amount [mmol (millimole)] of the polar group-containing phenoxy compound bonded in 100 g of the modified conjugated diene polymer. In the present invention, the amount of the polar group-containing phenoxy compound bonded in 100 g of the modified conjugated diene polymer is preferably 0.005 to 55 mmol, more preferably 0.01 to 27 mmol, further preferably 0.05 to 16 mmol.

Further, the addition amount means an amount (part(s) by mass) of the polar group-containing phenoxy compound bonded to 100 parts by mass of the modified conjugated diene polymer.

The modification degree in the present invention (the amount [mmol (millimole)] of the polar group-containing phenoxy compound bonded in 100 g of the modified conjugated diene polymer) is quantitatively determined by means of a pyrolysis gas chromatography mass spectrometer (GC-MS). When the polar group-containing phenoxy compound contains a peptide-derived monovalent group, a protein-derived monovalent group, or an amino acid-derived monovalent group (for example, the polar group-containing phenoxy compound containing an amino acid-derived monovalent group includes tyrosine), the modification degree is determined as follows. A sample to be tested is immersed in 6 N hydrochloric acid at 110°C for 24 hours to cause the contained protein or peptide to suffer a hydrolysis reaction, and the noncovalent-bonded amino acid is removed by reprecipitation. As a result, only the amino acid covalent-bonded to the polymer remains, and it is quantitatively determined by a pyrolysis GC-MS. The amount of the amino acid covalent-bonded to the modified conjugated diene polymer is taken as an amount of the polar group-containing phenoxy compound bonded.

The modified conjugated diene polymer of the present invention is produced, for example, as follows.

In the present invention, generally, the above-mentioned polar group-containing phenoxy compound is added to a solution obtained by adding water and optionally an emulsifying agent to a latex, an aqueous emulsion, or an aqueous dispersion of at least one conjugated diene polymer selected from natural rubber and a synthetic conjugated diene polymer, and stirred at a predetermined temperature to cause the polar group-containing phenoxy compound to undergo an addition reaction to a double bond of or the $\alpha$-position of a double bond of at least one of the main chain and side chain of the conjugated diene polymer molecule in the latex, aqueous emulsion, or aqueous dispersion of the conjugated diene polymer. As a result, the phenoxy group of the polar group-containing phenoxy compound is bonded, particularly, covalently bonded to at least one selected from the group consisting of the end, main chain, and side chain of the conjugated diene polymer to obtain a modified conjugated diene polymer. In the addition of the polar group-containing phenoxy compound to the latex, aqueous emulsion, or aqueous dispersion of the conjugated diene polymer, a phenol oxidase (preferably laccase) and, if desired, an emulsifying agent may be added in advance to the latex, aqueous emulsion, or aqueous dispersion of the conjugated diene polymer, or the polar group-containing phenoxy compound may be emulsified using an emulsifying agent and then added, together with a phenol oxidase (preferably laccase), to the latex, aqueous emulsion, or aqueous dispersion of the conjugated diene polymer. If necessary, an organic peroxide may be further added. With respect to the emulsifying agent which can be used in emulsifying the latex, aqueous emulsion, or aqueous dispersion of the conjugated diene polymer and/or the polar group-containing phenoxy compound,

there is no particular limitation, and examples of emulsifying agents include nonionic surfactants, such as polyoxyethylene lauryl ether.

For mixing a filler, such as carbon black or silica, into the modified conjugated diene polymer of the present invention to improve the low-heat-generation property and abrasion resistance of a rubber composition without causing the processability of the rubber composition to be poor, it is important that the polar group-containing phenoxy compound is introduced in a small amount uniformly into the individual conjugated diene polymer molecules. Therefore, the above-mentioned modification reaction is preferably conducted while stirring, for example, the ingredients including the latex, aqueous emulsion, or aqueous dispersion of the conjugated diene polymer, and the polar group-containing phenoxy compound and others are charged into a reaction vessel, and subjected to reaction at 30 to 80°C for 10 minutes to 24 hours to obtain a latex, aqueous emulsion, or aqueous dispersion of a modified conjugated diene polymer having the polar group-containing phenoxy compound added to conjugated diene polymer molecules. The thus-obtained latex, aqueous emulsion, or aqueous dispersion of the modified conjugated diene polymer may be used as such in the form of a latex, aqueous emulsion, or aqueous dispersion, or may be further coagulated and dried and used in a solid state. When used in a rubber composition, the modified conjugated diene polymer is preferably used in the form of a solid rubber. When used in the form of a solid rubber, the latex, aqueous emulsion, or aqueous dispersion of the modified conjugated diene polymer is coagulated, and washed and then dried using a dryer, such as a vacuum dryer, an air dryer, a drum dryer, or a double-screw extruder, obtaining a modified conjugated diene polymer in a solid state. With respect to the coagulant used for coagulating the latex, aqueous emulsion, or aqueous dispersion of the modified conjugated diene polymer, there is no particular limitation, but examples of coagulants include acids, such as formic acid and sulfuric acid, and salts, such as sodium chloride.

When the modified conjugated diene polymer of the present invention is a modified natural rubber, a protein containing tyrosine contained in a natural rubber latex also participates in the reaction, and therefore, even when the amount of the polar group-containing phenoxy compound added is 0 part by mass, a modified natural rubber may be formed. Therefore, the amount of the polar group-containing phenoxy compound added to the conjugated diene polymer before being modified is, relative to 100 parts by mass of the conjugated diene polymer, preferably 0 to 10 parts by mass, more preferably 0 to 7 parts by mass, further preferably 0 to 5 parts by mass, especially preferably 0 to 3 parts by mass. When the amount of the polar group-containing phenoxy compound added is 3 parts by mass or less, inherent physical properties of the conjugated diene polymer, such as viscoelasticity and S-S characteristics (stress-strain curve measured by a tensile tester), are not largely changed, and not only can inherent excellent physical properties of the conjugated diene polymer be secured, but also the processability of the rubber composition can be especially advantageously maintained or improved.

Further, in the modified synthetic conjugated diene polymer other than natural rubber, the amount of the polar group-containing phenoxy compound added to the synthetic conjugated diene polymer is, relative to 100 parts by mass of the synthetic conjugated diene polymer, preferably 0.01 to 10 parts by mass, more preferably 0.05 to 5 parts by mass, further preferably 0.1 to 3 parts by mass. When the amount of the polar group-containing phenoxy compound added is 0.1 part by mass or more, it is possible to especially advantageously improve the rubber composition in the low-heat-generation property and abrasion resistance. Further, when the amount of the polar group-containing phenoxy compound added is 3 parts by mass or less, inherent physical properties of the conjugated diene polymer are not largely changed, and not only can inherent excellent physical properties of the conjugated diene polymer be secured, but also the processability of the rubber composition can be especially advantageously maintained or improved.

The rubber component of the rubber composition of the present invention can contain, in addition to the modified conjugated diene polymer, another diene rubber in such an amount that the object of the present invention can be achieved. For example, it is preferred that, in the rubber component, the modified conjugated diene polymer is contained in an amount of 50 to 100% by mass and another diene rubber is contained in an amount of 50 to 0% by mass. As another diene rubber, at least one selected from the group consisting of natural rubber, a styrene-butadiene copolymer rubber, a polybutadiene rubber, a polyisoprene rubber, an acrylonitrile-butadiene copolymer rubber, a butyl rubber, a halogenated butyl rubber (such as Cl-IIR or Br-IIR), an ethylene-propylene-diene terpolymer rubber (EPDM), an ethylene-butadiene copolymer rubber (EBR), a propylene-butadiene copolymer rubber (PBR), and a chloroprene rubber, or the like can be used. One type of the modified conjugated diene polymer may be individually used, or two or more types of the modified conjugated diene polymers may be used in the form of a blend, and one type of the other diene rubber may be individually used, or two or more types of the other diene rubbers may be used in the form of a blend.

It is preferred that the rubber composition of the present invention further contains a filler, in addition to a rubber component containing the modified conjugated diene polymer. With respect to the amount of the filler mixed, there is no particular limitation, but the amount of the filler is, relative to 100 parts by mass of the rubber component containing the modified conjugated diene polymer, preferably in the range of from 5 to 150 parts by mass, further preferably in the range of from 10 to 100 parts by mass. When the amount of the filler mixed is 5 parts by mass or more, reinforcing properties can be advantageously obtained, and, when the amount of the filler mixed is 150 parts by mass or less, it is possible to prevent the processability from becoming poor.

As a filler mixed into the rubber composition of the present invention, at least one selected from carbon black and an inorganic filler is used.

With respect to the carbon black, there is no particular limitation, and, for example, at least one carbon black selected from the group consisting of SAF, ISAF, IISAF, N339, HAF, FEF, GPF, and SRF grades of a high, medium, or low structure is preferably used, especially, at least one carbon black selected from the group consisting of SAF, ISAF, IISAF, N339, HAF, and FEF grades is preferably used. The nitrogen adsorption specific surface area ($N_2SA$, as measured in accordance with JIS K 6217-2:2001) of carbon black is preferably 30 to 250 $m^2/g$.

One type of the carbon black may be individually used, or two or more types of the carbon black may be used in combination. In the present invention, carbon black is not included in the inorganic filler.

With respect to the inorganic filler mixed into the rubber composition of the present invention, from the viewpoint of achieving both the low-heat-generation property and the abrasion resistance, silica is preferred. As silica, any commercially available products can be used, and, of these, wet precipitated (precipitated) silica, wet gelled silica, dry silica, or colloidal silica is preferably used, and wet precipitated silica is especially preferably used. Silica preferably has a BET specific surface area (as measured in accordance with ISO 5794/1) of 40 to 350 $m^2/g$. The silica having a BET surface area in this range has an advantage in that both the rubber reinforcing properties and dispersibility in the rubber component can be achieved. From this point of view, silica having a BET surface area in the range of from 80 to 350 $m^2/g$ is further preferred, and silica having a BET surface area in the range of from 120 to 350 $m^2/g$ is especially preferred. As the above-mentioned silica, commercially available products, such as trade name "Nipsil AQ" (BET specific surface area = 205 $m^2/g$), "Nipsil KQ", manufactured by Tosoh Silica Corporation, and trade name "Ultrasil VN3" (BET specific surface area = 175 $m^2/g$), manufactured by Degussa AG, can be used.

With respect to the inorganic filler mixed into the rubber composition of the present invention, an inorganic compound represented by the following general formula (IV) can be used instead of silica or in addition to silica.

$$dM^1 \bullet xSiO_y \bullet zH_2O \qquad (IV)$$

In the general formula (IV) above, $M^1$ is at least one selected from a metal selected from the group consisting of aluminum, magnesium, titanium, calcium, and zirconium, an oxide and a hydroxide of the metal, a hydrate thereof, and a carbonate of the metal, and d, x, y, and z are, respectively, an integer of 1 to 5, an integer of 0 to 10, an integer of 2 to 5, and an integer of 0 to 10.

When both x and z in the general formula (IV) are 0, the inorganic compound is at least one metal selected from aluminum, magnesium, titanium, calcium, and zirconium, an oxide of the metal, or a hydroxide of the metal.

In the general formula (IV) above, $M^1$ is preferably at least one selected from aluminum metal, an oxide and a hydroxide of aluminum, a hydrate thereof, and a carbonate of aluminum, and is especially preferably aluminum hydroxide [$Al(OH)_3$].

With respect to the inorganic filler in the present invention, silica may be solely used, or silica and one type or more of the inorganic compound represented by the general formula (IV) may be used in combination.

In the rubber composition of the present invention, various mixing additives generally mixed into a rubber composition, e.g., a vulcanization activator, such as stearic acid, resin acid, or zinc oxide, a vulcanization accelerator, an antioxidant, and a softening agent are kneaded, if necessary, in the first stage or the final stage for kneading, or in an intermediate stage between the first stage and the final stage.

In the present invention, as a kneading apparatus, a Banbury mixer, an intermeshing internal mixer, a roll, an intensive mixer, a kneader, a double-screw extruder, or the like is used.

## Examples

Hereinbelow, the present invention will be described in more detail with reference to the following Examples, which should not be construed as limiting the scope of the present invention.

The addition amount, modification degree, low-heat-generation property (tanδ index), and abrasion resistance (index) were evaluated by the methods described below.

### 1. Addition amount

The addition amount is an amount [parts by weight] of the polar group-containing phenoxy compound bonded to 100 parts by weight of the modified conjugated diene polymer, and was quantitatively determined by means of a pyrolysis gas chromatography mass spectrometer (GC-MS).

2. Modification degree

The modification degree is an amount [mmol (millimole)] of the polar group-containing phenoxy compound bonded in 100 g of the modified conjugated diene polymer, and was quantitatively determined by means of a pyrolysis gas chromatography mass spectrometer (GC-MS). When the polar group-containing phenoxy compound contains a peptide-derived monovalent group, a protein-derived monovalent group, and an amino acid-derived monovalent group, the modification degree is determined as follows. A sample to be tested is immersed in 6 N hydrochloric acid at 110°C for 24 hours to cause the contained protein or peptide to suffer a hydrolysis reaction, and the noncovalent-bonded amino acid is removed by reprecipitation. As a result, only the amino acid covalent-bonded to the polymer remains, and it is quantitatively determined by a pyrolysis GC-MS, and the amount of the amino acid covalent-bonded to the modified conjugated diene polymer was taken as an amount of the polar group-containing phenoxy compound bonded.

3. Low-heat-generation property (tanδ index)

Using a spectrometer (dynamic viscoelasticity measuring tester), manufactured by Ueshima Seisakusho Co., Ltd., (E"/E') = tanδ was measured under conditions that the frequency was 52 Hz, the initial strain was 10%, the measurement temperature was 60°C, and the dynamic strain was 1%, and was determined as an index represented by the expression below in which the tanδ of the vulcanized rubber composition 1 in Comparative Example 1 is taken as 100. The smaller the index value, the more excellent the low-heat-generation property, or the smaller the hysteresis loss.

Low-heat-generation property index = [(tanδ of the vulcanized rubber composition tested)/(tanδ of the vulcanized rubber composition 1 obtained in Comparative Example 1)] × 100

4. Abrasion resistance (index)

In accordance with JIS K 6264-2:2005, using a Lambourn abrasion tester, a test was conducted at room temperature under conditions such that the slip ratio was 25%, and a reciprocal of an abrasion amount was determined as an index represented by the expression below in which the value of the vulcanized rubber composition 1 or 2 in Comparative Example 1 is taken as 100. The larger the index value, the more excellent the abrasion resistance.

Abrasion resistance index = [(Abrasion amount of the vulcanized rubber composition 1 or 2 in Comparative Example 1)/(Abrasion amount of the vulcanized rubber composition tested)] × 100

Production Example 1

(Modification reaction step for a natural rubber latex)

Water was added to a field latex of natural rubber to obtain a latex having a dry rubber concentration of 30% by mass. 2,000 g of the obtained latex was charged into a stainless steel reaction vessel equipped with a stirrer and a temperature control jacket, and a mixture, which was preliminarily prepared by adding 10 mL of water and 90 mg of an emulsifying agent [EMULGEN 1108, manufactured by Kao Corporation] to 10.8 g of tyrosine (1.8 parts by mass, relative to 100 parts by mass of the natural rubber component) and 0.6 g of laccase (trade name "NS81268", manufactured by Novozymes) and emulsifying the resultant mixture, was added to the latex, and subjected to reaction at 60°C for 8 hours while stirring to obtain a modified natural rubber latex.

(Coagulation and drying step)

Then, formic acid was added to the above-obtained modified natural rubber latex to adjust the pH to 4.7, thereby coagulating the modified natural rubber latex. The thus-obtained solid material was subjected to treatment using a scraper five times, and passed through a shredder to be in a crumb form and then, dried using a hot-air dryer at 110°C

for 210 minutes to obtain a modified conjugated diene polymer A which is a modified natural rubber. An analysis was made to determine an addition amount of tyrosine in the obtained modified conjugated diene polymer A (amount of the tyrosine bonded to the natural rubber). As a result, the addition amount of tyrosine was found to be 0.24 part by mass, relative to 100 parts by mass of the rubber component in the natural rubber latex before being modified. The modification degree was 1.3 mmol (millimole).

Production Examples 2 to 8

Modified conjugated diene polymers B to H were individually obtained in the same manner as in Production Example 1 above except that, instead of 10.8 g of tyrosine (1.8 parts by mass), as a polar group-containing phenoxy compound, the polar group-containing phenoxy compounds shown in Table 1 were individually added in the respective amounts shown in Table 1. Further, an analysis was made in the same manner as in the analysis for the modified conjugated diene polymer A to determine an addition amount and modification degree of the modified conjugated diene polymers B to H, and the results shown in Table 1 were obtained.

Production Example 9

Vinyltriethoxysilane and 4-hydroxybenzenethiol in an equimolar amount were first placed in a Schlenk flask, and azobisisobutyronitrile (AIBN) in a 1/100 molar amount was further placed in the flask, and the resultant mixture was subjected to reaction at 170°C for 10 hours while stirring, and the resultant product was subjected to vacuum distillation (140 to 143°C, 0.1 torr or less), and a mass spectrometric analysis made on the product confirmed that 4-[(2-triethoxysilyl)ethylthio]phenol was formed. A modified conjugated diene polymer I was obtained in the same manner as in Production Example 1 above except that, instead of 10.8 g of tyrosine (1.8 parts by mass), as a polar group-containing phenoxy compound, the above-obtained 4-[(2-triethoxysilyl)ethylthio]phenol was added in the amount shown in Table 1. Further, an analysis was made in the same manner as in the analysis for the modified conjugated diene polymer A to determine an addition amount and modification degree of the modified conjugated diene polymer I, and the results shown in Table 1 were obtained.

Production Example 10

The above-mentioned natural rubber latex was not subjected to modification reaction step but was directly coagulated and dried to prepare an unmodified conjugated diene polymer.

Table 1

| | Product | Type of polar group-containing phenoxy compound | Amount (parts by mass) | Addition amount (parts by mass) | Modification degree (mmol) |
|---|---|---|---|---|---|
| Production Example 1 | Modified conjugated diene polymer A | Tyrosine *1 | 1.8 | 0.24 | 1.3 |
| Production Example 2 | Modified conjugated diene polymer B | Peptide having tyrosine at end *2 | 2.0 | 0.20 | 0.15 |
| Production Example 3 | Modified conjugated diene polymer C | Protein having tyrosine at end *3 | 2.0 | 0.16 | 0.06 |
| Production Example 4 | Modified conjugated diene polymer D | Amidol *4 | 2.0 | 0.26 | 1.3 |
| Production Example 5 | Modified conjugated diene polymer E | 4-Aminophenol *5 | 1.1 | 0.14 | 1.3 |
| Production Example 6 | Modified conjugated diene polymer F | 4-(Aminomethyl)phenol *6 | 1.2 | 0.16 | 1.3 |
| Production Example 7 | Modified conjugated diene polymer G | 4-Hydroxybenzoic acid *7 | 1.4 | 0.18 | 1.3 |
| Production Example 8 | Modified conjugated diene polymer H | 4-Hydroxybenzyl alcohol *8 | 1.2 | 0.16 | 1.3 |

(continued)

| | Product | Type of polar group-containing phenoxy compound | Amount (parts by mass) | Addition amount (parts by mass) | Modification degree (mmol) |
|---|---|---|---|---|---|
| Production Example 9 | Modified conjugated diene polymer I | 4-[(2-Triethoxysilyl) ethylthio]phenol *9 | 2.6 | 0.34 | 1.3 |
| Production Example 10 | Unmodified conjugated diene polymer | None | 0 | 0 | 0 |

<Remarks>

The "Amount" indicates an amount (part(s) by mass) of the polar group-containing phenoxy compound added, relative to 100 parts by mass of the unmodified conjugated diene polymer.

The "Addition amount" indicates an amount (part(s) by mass) of the polar group-containing phenoxy compound bonded to 100 parts by mass of the modified conjugated diene polymer.

The "Modification degree" indicates an amount [mmol (millimole)] of the polar group-containing phenoxy compound bonded in 100 g of the modified conjugated diene polymer.

*1: L-Tyrosine, manufactured by Tokyo Chemical Industry Co., Ltd.
*2: Peptide having tyrosine at the end (10AA), manufactured by Sigma-Aldrich Co., LLC.
*3: Protein having tyrosine at the end, manufactured by Sigma-Aldrich Co., LLC.
*4: Amidol, manufactured by Tokyo Chemical Industry Co., Ltd.
*5: 4-Aminophenol, manufactured by Tokyo Chemical Industry Co., Ltd.
*6: 4-(Aminomethyl)phenol, manufactured by Tokyo Chemical Industry Co., Ltd.
*7: 4-Hydroxybenzoic acid, manufactured by Tokyo Chemical Industry Co., Ltd.
*8: 4-Hydroxybenzyl alcohol, manufactured by Tokyo Chemical Industry Co., Ltd.
*9: 4-[(2-Triethoxysilyl)ethylthio]phenol obtained in Production Example 9

Examples 1 to 9 and Comparative Example 1

According to the mixing formulations of the rubber compositions 1 and 2 shown in Table 2, 20 types of rubber compositions in Examples 1 to 9 and Comparative Example 1 were prepared by kneading by means of a Banbury mixer which is an internal mixer. The prepared 20 types of rubber compositions were individually vulcanized under conditions at 145°C for 40 minutes, and then evaluated for the low-heat-generation property (tanδ index) and abrasion resistance (index). The results are shown in Table 3.

Table 2

| Formulation of rubber composition | Amount mixed (parts by mass) | |
|---|---|---|
| | Rubber composition 1 | Rubber composition 2 |
| Rubber component *11 | 100 | 100 |
| Carbon black N339 *12 | 50 | - |
| Silica *13 | - | 55 |
| Silane coupling agent *14 | - | 5.5 |
| Softening agent *15 | 5 | 10 |
| Stearic acid | 2 | 2 |
| Antioxidant 6C *16 | 1 | 1 |
| Zinc oxide | 3 | 3 |
| Vulcanization accelerator DZ *17 | 0.8 | - |
| Vulcanization accelerator DPG *18 | - | 1 |

(continued)

| Formulation of rubber composition | Amount mixed (parts by mass) | |
|---|---|---|
| | Rubber composition 1 | Rubber composition 2 |
| Vulcanization accelerator DM *19 | - | 1 |
| Vulcanization accelerator NS *20 | - | 1 |
| Sulfur | 1 | 1.5 |

[Remarks]

*11: Modified conjugated diene polymers A to K prepared in Production Examples 1 to 12 and unmodified conjugated diene polymer

*12: N339, trade name "SEAST KH", manufactured by Tokai Carbon Co., Ltd.

*13: Wet precipitated silica, trade name "Nipsil AQ", manufactured by Tosoh Silica Corporation

*14: Bis(3-triethoxysilylpropyl) disulfide (average sulfur chain length: 2.35), silane coupling agent, trade name "Si75" (registered trademark), manufactured by Evonik

*15: Process oil, trade name "A/O Mix", manufactured by Sankyo Yuka Kogyo K.K.

*16: N-(1,3-Dimethylbutyl)-N'-phenyl-p-phenylenediamine, trade name "Nocrac 6C", manufactured by Ouchi Shinko Chemical Industrial Co., Ltd.

*17: N,N-Dicyclohexyl-2-benzothiazolyl sulfenamide, trade name "Nocceler DZ", manufactured by Ouchi Shinko Chemical Industrial Co., Ltd.

*18: 1,3-Diphenylguanidine, trade name "Sanceler D", manufactured by Sanshin Chemical Industry Co., Ltd.

*19: Di-2-benzothiazolyl disulfide, trade name "Sanceler DM", manufactured by Sanshin Chemical Industry Co., Ltd.

*20: N-Tert-butyl-2-benzothiazolyl sulfenamide, trade name "Sanceler NS", manufactured by Sanshin Chemical Industry Co., Ltd.

Table 3

| | | Example | | | | | | | | | Comparative Example |
|---|---|---|---|---|---|---|---|---|---|---|---|
| | | 1 | 2 | 3 | 4 | 5 | 6 | 7 | 8 | 9 | 1 |
| Type of modified conjugated diene polymers A to I or unmodified conjugated diene polymer | | A | B | C | D | E | F | G | H | I | Unmodified conjugated diene polymer |
| Evaluation results for rubber composition 1 | Low-heat-generation property (index) | 81 | 85 | 90 | 82 | 88 | 82 | 98 | 99 | 98 | 100 |
| | Abrasion resistance (index) | 119 | 115 | 110 | 118 | 112 | 118 | 102 | 101 | 102 | 100 |

(continued)

| | | Example | | | | | | | | | Comparative Example |
|---|---|---|---|---|---|---|---|---|---|---|---|
| | | 1 | 2 | 3 | 4 | 5 | 6 | 7 | 8 | 9 | 1 |
| Evaluation results for rubber composition 2 | Low-heat-generation property (index) | 53 | 63 | 67 | 54 | 60 | 54 | 70 | 71 | 54 | 72 |
| | Abrasion resistance (index) | 123 | 111 | 106 | 122 | 114 | 122 | 103 | 101 | 122 | 100 |

As apparent from Table 3, with respect to each of the rubber composition 1 which is a rubber composition having carbon black mixed thereinto and the rubber composition 2 which is a rubber composition having silica mixed thereinto, the rubber compositions in Examples 1 to 9 had excellent low-heat-generation property (tanδ index) and excellent abrasion resistance (index), as compared to the rubber composition in Comparative Example 1.

Production Example 11

(Modification reaction step for a styrene-butadiene copolymer rubber)

100 Parts by mass of a styrene-butadiene copolymer rubber (SBR, trade name "#1500", manufactured by JSR Corporation) was chopped into 1 mm squares, and added to 100 parts by mass of an acetate buffer (20 mM; pH: 4.7), together with 1.8 parts by mass of tyrosine, and laccase (trade name "NS81268", manufactured by Novozymes A/S; enzyme activity: 1,000 (Unit/g); oxidation-reduction potential: 480 mV) was added in a 100 (Unit/g × phr) addition unit amount relative to 100 parts by mass of the styrene-butadiene copolymer rubber, and the resultant mixture was stirred for one hour. Then, the mixture was dried using a hot-air dryer under temperature conditions at 130°C for 10 minutes to obtain a modified conjugated diene polymer J (modified styrene-butadiene copolymer rubber J). The "phr" has the same meaning as that of "part(s) by mass".

Production Example 12

(Modification reaction step for a styrene-butadiene copolymer rubber)

A modified conjugated diene polymer K (styrene-butadiene copolymer rubber K) was obtained in the same manner as in Production Example 11 except that no laccase was added.

The tyrosine addition amount and modification degree in Production Examples 11 and 12 are shown in Table 4.

Table 4

| | Product | Type of polar group-containing phenoxy compound | Tyrosine amount (parts by mass) | Tyrosine addition amount (parts by mass) | Modification degree (mmol) |
|---|---|---|---|---|---|
| Production Example 11 | Modified conjugated diene polymer J | Tyrosine *1, laccase added | 1.8 | 0.12 | 0.65 |
| Production Example 12 | Unmodified conjugated diene polymer K | Tyrosine *1, no laccase added | 1.8 | 0 | 0 |
| *1: L-Tyrosine, manufactured by Tokyo Chemical Industry Co., Ltd. | | | | | |

Example 10 and Comparative Example 2

According to the mixing formulations of the rubber compositions 1 and 2 shown in Table 2, two types of rubber

compositions in Example 10 and Comparative Example 2 were prepared by kneading by means of a Banbury mixer which is an internal mixer. The prepared two types of rubber compositions were individually vulcanized under conditions at 145°C for 40 minutes, and then evaluated for the low-heat-generation property (tanδ index) and abrasion resistance (index). The results are shown in Table 5.

Table 5

| | | Example | Comparative Example |
|---|---|---|---|
| | | 10 | 2 |
| Type of conjugated diene polymer | | Modified conjugated diene polymer J | Unmodified conjugated diene polymer K |
| Evaluation results for rubber composition 1 | Low-heat-generation property (index) | 90 | 106 |
| | Abrasion resistance (index) | 110 | 105 |
| Evaluation results for rubber composition 2 | Low-heat-generation property (index) | 60 | 74 |
| | Abrasion resistance (index) | 120 | 106 |

As apparent from Table 5, with respect to each of the rubber composition 1 which is a rubber composition having carbon black mixed thereinto and the rubber composition 2 which is a rubber composition having silica mixed thereinto, the rubber composition in Example 10 had excellent low-heat-generation property (tanδ index) and excellent abrasion resistance (index), as compared to the rubber composition in Comparative Example 2.

Industrial Applicability

By using the modified conjugated diene polymer of the present invention as a rubber component of a rubber composition, a rubber composition having excellent low-heat-generation property and excellent abrasion resistance can be obtained, and therefore is advantageously used as a rubber composition for use in members for various types of tires (particularly, various pneumatic radial tires) for a passenger car, a small-size truck, a light passenger car, a light truck, and a large-size vehicle (for truck and bus, for off-road tire (for vehicle for construction, vehicle for mine, and the like)) and the like, particularly for use in members for tread of various pneumatic radial tires (especially a member for a tread grounding part).

## Claims

1. A modified conjugated diene polymer in which a phenoxy group of a polar group-containing phenoxy compound is bonded to at least one selected from the group consisting of the end, main chain, and side chain of a conjugated diene polymer,
   wherein the modified conjugated diene polymer has both an amino group and a carboxyl group as the polar group and, wherein the conjugated diene polymer is natural rubber.

2. The modified conjugated diene polymer according to claim 1, wherein the polar group-containing phenoxy compound is at least one selected from the group consisting of tyrosine, a peptide having tyrosine, and a protein having tyrosine.

3. The modified conjugated diene polymer according to claim 1 or 2, wherein the amount of the polar group-containing phenoxy compound bonded in 100 g of the modified conjugated diene polymer is from 0.005 to 55 mmol.

4. A rubber composition comprising the modified conjugated diene polymer according to any one of claims 1 to 3.

## Patentansprüche

1. Modifiziertes konjugiertes Dienpolymer, bei dem eine Phenoxygruppe einer polaren Gruppe enthaltenden Phenoxy-Verbindung an mindestens eines gebunden ist, ausgewählt aus der Gruppe bestehend aus Ende, Hauptkette und

Seitenkette eines konjugierten Dienpolymers,
wobei das modifizierte konjugierte Dienpolymer sowohl eine Aminogruppe als auch ein Carboxylgruppe als polare Gruppe aufweist, und
wobei das konjugierte Dienpolymer Naturkautschuk ist.

**2.** Modifiziertes konjugiertes Dienpolymer nach Anspruch 1, wobei die eine polare Gruppe enthaltende Phenoxyverbindung mindestens eines ist ausgewählt aus der Gruppe bestehend aus Tyrosin, ein Peptid welches Tyrosin aufweist und ein Protein welches Tyrosin aufweist.

**3.** Modifiziertes konjugiertes Dienpolymer nach Anspruch 1 oder 2, wobei die Menge an der eine polare Gruppe enthaltenden Phenoxyverbindung, welche in 100g des modifizierten konjugierten Dienpolymers gebunden ist, 0,005 bis 55 mmol beträgt.

**4.** Kautschukzusammensetzung umfassend das modifizierte konjugierte Dienpolymer nach einem der Ansprüche 1 bis 3.

## Revendications

**1.** Polymère diène conjugué modifié dans lequel un groupe phénoxy d'un composé phénoxy contenant un groupe polaire est lié à au moins un élément sélectionné à partir du groupe constitué de l'extrémité, la chaîne principale, et la chaîne latérale d'un polymère diène conjugué,
dans lequel le polymère diène conjugué modifié a, à la fois, un groupe amino et un groupe carboxyle en tant que groupe polaire et,
dans lequel le polymère diène conjugué est du caoutchouc naturel.

**2.** Polymère diène conjugué modifié selon la revendication 1, dans lequel le composé phénoxy contenant un groupe polaire est au moins un élément sélectionné à partir du groupe constitué de la tyrosine, d'un peptide comprenant de la tyrosine, et d'une protéine comprenant de la tyrosine.

**3.** Polymère diène conjugué modifié selon les revendications 1 ou 2, dans lequel la quantité du composé phénoxy contenant un groupe polaire lié dans 100 grammes de polymère diène conjugué modifié est de 0,005 à 55 mmol.

**4.** Composition de caoutchouc comprenant le polymère diène conjugué modifié selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4499243 A
- GB 743587 A
- US 3582514 A
- GB 1271830 A
- US 3444134 A
- JP 2006152171 A
- JP 2006152045 A
- JP 2004359716 A
- JP 2004359717 A
- JP 2004359713 A
- JP 2004359714 A